(19) **Europäisches Patentamt**
**European Patent Office**
**Office européen des brevets**

(11) **EP 4 227 282 A1**

(12) **EUROPEAN PATENT APPLICATION**
published in accordance with Art. 153(4) EPC

(43) Date of publication:
**16.08.2023 Bulletin 2023/33**

(21) Application number: **21877587.2**

(22) Date of filing: **04.10.2021**

(51) International Patent Classification (IPC):
***C04B 35/577*** (2006.01)     ***H05B 6/12*** (2006.01)

(52) Cooperative Patent Classification (CPC):
**C04B 35/565; H05B 6/12**

(86) International application number:
**PCT/JP2021/036716**

(87) International publication number:
**WO 2022/075288 (14.04.2022 Gazette 2022/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.10.2020 JP 2020171499**

(71) Applicant: **AGC INC.
Chiyoda-ku,
Tokyo 1008405 (JP)**

(72) Inventors:
• **ANDO, Ryota
Tokyo 100-8405 (JP)**
• **OYAMA, Toshiyuki
Tokyo 100-8405 (JP)**
• **SUSA, Shunsuke
Tokyo 100-8405 (JP)**
• **YAMADA, Kenji
Tokyo 100-8405 (JP)**

(74) Representative: **Müller-Boré & Partner
Patentanwälte PartG mbB
Friedenheimer Brücke 21
80639 München (DE)**

(54) **SISIC MEMBER AND HEATING DEVICE**

(57)     The present invention relates to an SiSiC member which is provided with at least one long hole inside the SiSiC member and has a tubular region A which is an outer peripheral region of the long hole and a tube exterior region B which is a region outside the tubular region A, wherein the content of Si alone in terms of volume% in the tube exterior region B is larger than the content of Si alone in terms of volume% in the tubular region A.

*FIG. 1*

**Description**

TECHNICAL FIELD

The present invention relates to a SiSiC member.

BACKGROUND ART

A SiSiC member, which is a composite material containing silicon carbide (SiC) and silicon (Si), is known in the related art (Patent Literature 1).

CITATION LIST

PATENT LITERATURE

Patent Literature 1: WO 2019/194137

SUMMARY OF THE INVENTION

TECHNICAL PROBLEM

The SiSiC member is expected to be used in various applications because of having excellent properties such as thermal conductivity, and development of a novel SiSiC member is also desired.

For example, even when a long hole having an inner diameter of 2 mm or less and a length of 100 mm or more is to be drilled in the SiSiC member by processing using a drill, since the SiSiC member is extremely hard, the drill bends and the drilling cannot be achieved. Also in processing using a laser, the laser cannot reach a depth of 100 mm while maintaining an inner diameter of 2 mm or less.

The present invention has been made in view of the above points, and an object of the present invention is to provide a novel SiSiC member that has not existed in the related art.

SOLUTION TO PROBLEM

As a result of intensive studies, the inventors of the present invention have found that the above object can be achieved by adopting the following configuration, and have completed the present invention.

That is, the present invention provides the following [1] to [6].

[1] A SiSiC member including at least one long hole provided therein, the SiSiC member including: a tubular region A which is an outer peripheral region of the long hole; and a tube exterior region B which is a region outside the tubular region A, in which a content of Si simple substance in the tube exterior region B in terms of vol% is higher than a content of Si simple substance in the tubular region A in terms of vol%.

[2] The SiSiC member according to the above [1], in which a ratio A/B of a diameter of the Si simple substance in the tubular region A to a diameter of the Si simple substance in the tube exterior region B is less than 0.2.

[3] A SiSiC member including at least one long hole provided therein, the SiSiC member including: a tubular region A which is an outer peripheral region of the long hole; and a tube exterior region B which is a region outside the tubular region A, in which a content of Si simple substance in the tubular region A is 20 vol% or less, and a diameter of Si simple substance in the tubular region A is 10 $\mu$m or less.

[4] The SiSiC member according to any one of the above [1] to [3], in which the long hole has a diameter of 0.1 mm to 2 mm, and the long hole has a length of 100 mm to 450 mm.

[5] The SiSiC member according to any one of the above [1] to [4], in which a volume ratio Si/SiC of the Si simple substance to SiC in the tube exterior region B is 20/80 to 40/60.

[6] A heating device including: the SiSiC member according to any one of the above [1] to [5]; and a rod-shaped member, in which the rod-shaped member is inserted into the long hole.

ADVANTAGEOUS EFFECTS OF INVENTION

According to the present invention, it is possible to provide a novel SiSiC member that has not existed in the related art.

BRIEF DESCRIPTION OF DRAWINGS

[FIG. 1] FIG. 1 is a perspective view illustrating a SiSiC member.
[FIG. 2] FIG. 2 is a cross-sectional view illustrating a SiC molded body.
[FIG. 3] FIG. 3 is a cross-sectional view illustrating a state in which a carbon tube is disposed in a groove of the SiC molded body.
[FIG. 4] FIG. 4 is a cross-sectional view illustrating a state in which the groove of the SiC molded body is filled with a filler.
[FIG. 5] FIG. 5 is a schematic cross-sectional view illustrating a state in which a Si spout is present in a long hole.
[FIG. 6] FIG. 6 is a cross-sectional view illustrating a SiSiC member including a bonding surface.

DESCRIPTION OF EMBODIMENTS

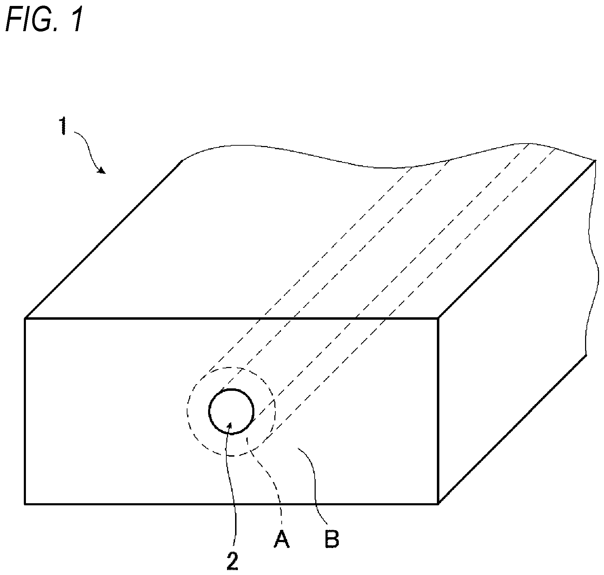

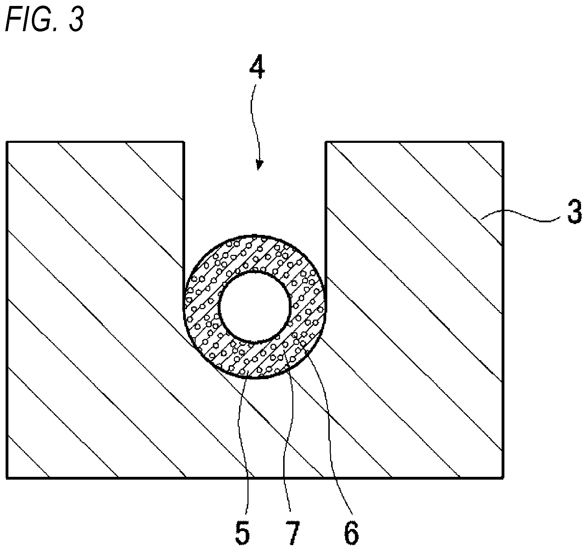

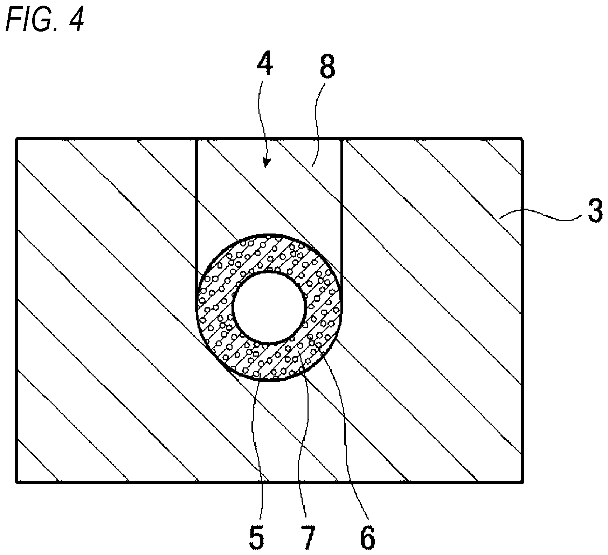

FIG. 1 is a perspective view illustrating a SiSiC member 1.
The SiSiC member 1 is a composite material containing silicon (Si) and silicon carbide (SiC), and has, for example, a low coefficient of thermal expansion and is excellent in heat resistance, wear resistance, thermal conductivity, strength, and the like.
The SiSiC member 1 includes a long hole 2 which is long elongated in one direction inside of the SiSiC member.
Although only one long hole 2 is illustrated in FIG. 1, the SiSiC member 1 may have a plurality of long holes 2. In the case where a plurality of long holes 2 are present, the respective long holes 2 may be parallel to each other or intersect with each other, and are appropriately set according to an application of the SiSiC member 1. The long hole 2 may be curved.
The long hole 2 may be sealed at one end, or may penetrate the SiSiC member 1 from one end to the other end. The long hole 2 is appropriately set according to the application of the SiSiC member 1.
A diameter of the long hole is appropriately set according to the application of the SiSiC member, and is, for example, 0.1 mm to 2 mm, preferably 0.2 mm to 1.6 mm, and more preferably 0.5 mm to 1.2 mm.
A length of the long hole is appropriately set according to the application of the SiSiC member, and is, for example, 100 mm to 450 mm, preferably 120 mm to 400 mm, and more preferably 150 mm to 300 mm.
The diameter and the length of the long hole conform to a diameter and a length of a carbon tube (see FIG. 3 and FIG. 4), which will be described later.
As shown in FIG. 1, the SiSiC member 1 includes a tubular region A which is an outer peripheral region of the long hole 2 and a tube exterior region B which is a region outside the tubular region A.

<First Embodiment>

A content (unit: vol%) of Si simple substance in the tube exterior region B is higher than a content (unit: vol%) of Si simple substance Si in the tubular region A.
That is, the tubular region A and the tube exterior region B can be distinguished from each other by the respective contents (unit: vol%) of the Si simple substance.
Specifically, a ratio (A/B) of the content (unit: vol%) of the Si simple substance in the tubular region A to the content (unit: vol%) of the Si simple substance in the tube exterior region B is less than 1, preferably 0.5 or less, and more preferably 0.3 or less.
It is preferable that a diameter of the Si simple substance in the tube exterior region B is larger than a diameter of the Si simple substance in the tubular region A.
Specifically, a ratio (A/B) of the diameter of the Si simple substance in the tubular region A to the diameter of the Si simple substance in the tube exterior region B is preferably less than 1, more preferably 0.5 or less, further preferably 0.3 or less, and particularly preferably less than 0.2.

<Second Embodiment>

The content of the Si simple substance in the tubular region A is 20 vol% or less, and the diameter of the Si simple substance in the tubular region A is 10 $\mu$m or less.
The content of the Si simple substance in the tubular region A is preferably 17 vol% or less, and more preferably 14 vol% or less.
The diameter of the Si simple substance in the tubular region A is preferably 8 $\mu$m or less, and more preferably 6 $\mu$m or less.

On the other hand, it is preferable that the content of the Si simple substance in the tube exterior region B is more than 20 vol%, and the diameter of the Si simple substance in the tube exterior region B is more than 10 $\mu$m.

The content of the Si simple substance in the tube exterior region B is preferably 22 vol% or more, and more preferably 24 vol% or more.

The diameter of the Si simple substance in the tube exterior region B is preferably 12 $\mu$m or more, and more preferably 14 $\mu$m or more.

In either embodiment, a volume ratio (Si/SiC) of the Si simple substance to SiC in the tube exterior region B is preferably 20/80 to 40/60, and more preferably 22/78 to 30/70.

The contents (unit: vol%) of the Si simple substance and SiC and the diameter of the Si simple substance are obtained from an optical micrograph as follows.

In a micrograph of a cross section of the SiSiC member, the blackest part is C simple substance, the gray part lighter than the C simple substance is SiC, and the lightest part, i.e., a white part is the Si simple substance.

Using image analysis software (WinROOF2015), area ratios of the C simple substance, SiC, and the Si simple substance is obtained from a micrograph of any cross section of the SiSiC member, and the obtained area ratios are used as the respective volume ratios.

At the same time, a circle-equivalent diameter of each Si simple substance is obtained and averaged to obtain the diameter of the Si simple substance.

In both cases, an average value obtained from any 5 fields of view is used.

In either embodiment, a thermal conductivity of the SiSiC member is preferably 180 W/(m·K) or more, and more preferably 200 W/(m·K) or more.

The thermal conductivity is obtained at room temperature (23°C) by a flash method using xenon lamp light from LFA447 (Nanoflash) manufactured by NETZSCH-Geratebau GmbH. More specifically, the thermal conductivity is obtained in a diameter range of 25.4 mm including the tubular region A of the SiSiC member in the center. A measurement thickness is set to 6 mm.

<Production Method>

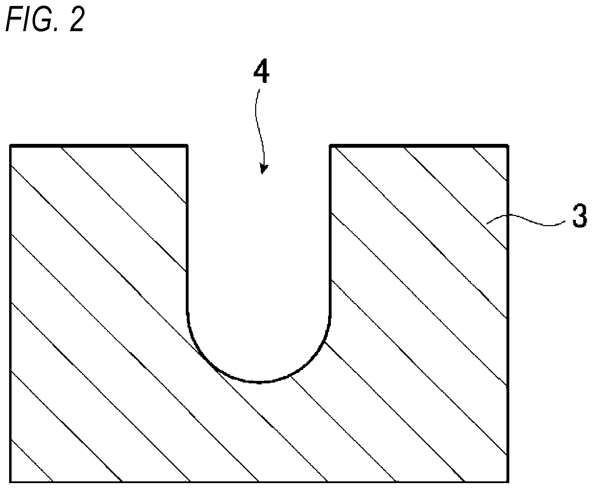

A method for producing the SiSiC member will be described with reference to FIG. 2 to FIG. 4.

<<Preparation of SiC Molded Body>>

FIG. 2 is a cross-sectional view illustrating a SiC molded body 3.

First, the SiC molded body 3 is formed. The SiC molded body 3 is a molded body containing SiC particles (not shown) and includes a U-shaped groove 4. The shape of the groove 4 is not particularly limited as long as it is a shape into which a carbon tube 5 (see FIG. 3 and FIG. 4), which will be described later, can be fitted.

The SiC molded body is also a porous body including a large number of pores. Therefore, as will be described later, the SiC molded body is impregnated with molten Si simple substance.

A porosity of the SiC molded body is preferably 30 vol% to 70 vol%, and more preferably 40 vol% to 60 vol%. The porosity is obtained by using a mercury porosimeter.

The dimensions and the shape of the SiC molded body are not particularly limited, and are appropriately set according to the dimensions and the shape of the SiSiC member to be finally obtained.

A 3D (three-dimensional) printing method such as a laser irradiation molding method or a binder jet molding method is used to prepare the SiC molded body. In the 3D printing method, layers are formed one by one and laminated one after another to obtain a SiC molded body, which is a laminated body having a desired shape. The thickness of each layer laminated one after another is, for example, 0.2 mm to 0.3 mm.

In the laser irradiation molding method, a layer containing SiC particles and a binder is irradiated with a laser. The binder present in an irradiated region is melted by the heat of this laser and solidifies, binding the SiC particles together. This operation is performed for respective layers laminated one after another, so as to prepare the SiC molded body.

In the binder jet molding method, a binder is jetted from an inkjet nozzle onto a layer containing SiC particles. SiC particles are bound together in a region where the binder is jetted. This operation is performed for respective layers laminated one after another, so as to prepare the SiC molded body.

In the binder jet molding method, the layer containing SiC particles may contain a curing agent (for example, an acidic substance aqueous solution containing xylenesulfonic acid, sulfuric acid, etc.) in advance, and the binder may be reacted (cured) only in a region where the jetted binder and the curing agent are in contact with each other. A content of the curing agent is, for example, 0.1 mass% to 1 mass % with respect to the SiC particles.

The SiC particles are preferably $\alpha$-SiC.

An average particle diameter of the SiC particles is, for example, 5 $\mu$m to 300 $\mu$m, preferably 30 $\mu$m to 200

μm, and more preferably 50 μm to 180 μm.

In general, the larger the SiC particles, the larger a pore diameter of the SiC molded body to be formed. Therefore, the average particle diameter of the SiC particles to be used can be appropriately selected according to the desired pore diameter.

The average particle diameter of the SiC particles is measured using a laser diffraction/scattering particle diameter distribution analyzer (MT3300EXII, manufactured by MicrotracBEL Corp.).

Examples of the binder include: thermosetting resins such as a phenolic resin; and self-curing resins such as a furan resin.

In the 3D printing method, the SiC molded body may be prepared while forming grooves.

Alternatively, a SiC molded body without grooves may be prepared first, and grooves may be formed later using a known cutting tool.

In a case of preparing a SiC molded body without grooves, the 3D printing method may not be used.

For example, the SiC molded body may be prepared by pouring a mixture (SiC molded body raw material) of SiC particles and a binder into a mold and performing drying. A solid content concentration of the SiC molded body raw material can be changed as appropriate within a range of, for example, 5 mass% to 100 mass%. After drying, the SiC molded body may be sintered by heating at a high temperature (e.g., 1500°C to 2300°C) in an inert atmosphere.

Examples of such a method include a method described in JPH05-32458A.

<<Disposition of Carbon Tube>>

Next, as shown in FIG. 3, the carbon tube 5 is disposed in the groove 4 of the SiC molded body 3.

FIG. 3 is a cross-sectional view illustrating a state in which the carbon tube 5 is disposed in the groove 4 of the SiC molded body 3.

The carbon tube 5 is, for example, a tubular member including a plurality of carbon fibers 6 and a binder 7 such as an epoxy resin with which spaces between the carbon fibers 6 are filled. The carbon tube 5 becomes the tubular region A in the obtained SiSiC member 1 (see FIG. 1).

A content of the carbon fiber in the carbon tube is, for example, 50 vol% to 80 vol%, and preferably 55 vol% to 75 vol%.

A diameter of the carbon fiber is, for example, 2 μm to 10 μm, and preferably 4 μm to 8 μm.

When the carbon tube is heated at a high temperature of 500°C or higher (specifically, for example, by heating at Si impregnation, which will be described later), the binder volatilizes and becomes a porous body like the SiC molded body. Accordingly, as will be described later, the carbon tube is impregnated with molten Si to generate SiC.

The carbon tube is not limited to a straight tube, and may be curved.

The carbon tube may be closed at one end. A carbon tube with both ends open may be used and one end may be filled with a filler to be described later.

«Filling»

Next, as shown in FIG. 4, the inside of the groove 4 of the SiC molded body 3 and a space above the carbon tube 5 are filled with a filler 8 containing SiC particles.

FIG. 4 is a cross-sectional view illustrating a state in which the groove 4 of the SiC molded body 3 is filled with the filler 8.

For example, a mixture of SiC particles and the binder is charged into the groove and then the mixture is dried or heated. Accordingly, the inside of the groove is filled with a filler having the same composition as that of the SiC molded body.

In the case of using the above binder jet molding method, for example, a mixture of SiC particles and a curing agent is charged into the groove, and then a binder is jetted to the mixture from an inkjet nozzle. Accordingly, the inside of the groove is filled with a filler having the same composition as that of the SiC molded body.

At this time, in the case where the groove is deep, the groove may be gradually filled with the filler by repeatedly charging the mixture and jetting the binder.

Hereinafter, unless otherwise specified, the filler is treated as part of the SiC molded body.

«C Impregnation and Drying»

Optionally, the SiC molded body may then be impregnated with a dispersion solution (carbon dispersion solution) in which carbon particles are dispersed. Hereinafter, this is also referred to as "C impregnation".

Accordingly, carbon particles are introduced into the pores of the SiC molded body, which is a porous body.

In this case, when the SiC molded body is impregnated with Si as will be described later, a part of Si also reacts with the carbon particles (C) to generate silicon carbide (SiC).

C impregnation is preferably performed in a reduced pressure environment since carbon particles are easily introduced. Then, it is preferable to change the reduced pressure environment to a pressurized environment. Accordingly, it is easier for the carbon particles to be introduced into the pores of the SiC molded body.

A content of the carbon particles in the carbon dispersion solution is, for example, 20 mass% to 60 mass%, and preferably 30 mass% to 55 mass%.

An average particle diameter of aggregated particles (secondary particles) of the carbon particles is, for example, 100 nm to 200 nm, and preferably 110 nm to 150 nm.

Examples of a dispersion medium for the carbon dispersion solution include: water; and alcohols such as methanol and ethanol.

After the C impregnation, it is preferable to dry the SiC molded body. Accordingly, the dispersion medium in the carbon dispersion solution is removed.

Examples of a drying method include natural drying, heat drying, and vacuum freeze drying.

In heat drying, the dispersion medium is removed by volatilization. In the case where the dispersion medium is water, a heating temperature is, for example, 100°C to 120°C.

In the vacuum freeze drying method, the dispersion medium is frozen by cooling in a drying chamber. A cooling temperature is a temperature equal to or lower than a temperature at which the dispersion medium freezes, and is, for example, -50°C to -5°C in the case where the dispersion medium contains water. After freezing, the dispersion medium is removed by sublimation by evacuating the inside of the drying chamber.

<<Si Impregnation>>

Next, the SiC molded body is impregnated with silicon (Si). Hereinafter, this is also referred to as "Si impregnation".

Specifically, for example, the SiC molded body and Si simple substance are in a state of being brought into contact with each other, and these (the SiC molded body and the Si simple substance) are heated to melt the Si simple substance. Accordingly, the SiC molded body, which is a porous body, is impregnated with the molten Si simple substance by a capillary action.

At this time, by melting the Si simple substance in a state of being disposed on an upper surface of the SiC molded body, it is easier to impregnate the SiC molded body with the molten Si simple substance using gravity.

A reduced pressure environment is preferred for an environment for melting the Si simple substance.

The heating temperature may be equal to or higher than the melting point of Si. The melting point of Si is generally 1410°C to 1414°C, although it varies slightly depending on the measurement method. The heating temperature is preferably 1500°C or higher.

On the other hand, the heating temperature is, for example, preferably 2300°C or lower, more preferably 2000°C or lower, and further preferably 1650°C or lower.

A part of Si with which the SiC molded body is impregnated also reaches the carbon tube. As described above, the carbon tube becomes a porous body by heating at Si impregnation. Therefore, Si is also introduced into the carbon tube. Then, Si reacts with the carbon fibers (C) constituting the carbon tube to generate silicon carbide (SiC).

Of the Si introduced into the SiC molded body, a part that does not react with carbon (C) remains as it is. Hereinafter, such Si is also referred to as "free Si". Thus, a SiSiC member, which is a composite material containing SiC and free Si, is obtained.

In the obtained SiSiC member, the region that was the carbon tube is the tubular region A (see FIG. 1), and the other region (the SiC molded body and the filler) is the tube exterior region B (see FIG. 1).

An amount of Si to be introduced into the SiC molded body is appropriately set according to the content of the Si simple substance in the SiSiC member to be finally obtained.

The obtained SiSiC member is sintered by heating when melting the Si simple substance.

That is, SiC (including newly generated SiC) bonds to each other and SiC bonds to Si to form a dense sintered body.

Therefore, the obtained SiSiC member is a composite material containing Si and SiC, and is also a sintered body.

<Si Spout>

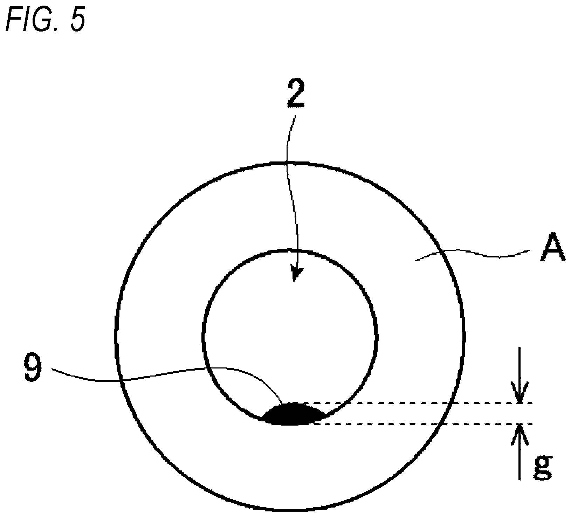

Here, prevention of a Si spout will now be described with reference to FIG. 5.

FIG. 5 is a schematic cross-sectional view illustrating a state in which a Si spout 9 is present in the long hole 2.

A density of silicon (Si) is 2.560 g/cm$^3$ in a liquid state and 2.293 g/cm$^3$ in a solid state.

That is, free Si expands by 12% in volume when cooled back to a solid state from a heated melt state.

Therefore, as shown in FIG. 5, the free Si expands in volume, passes through the tubular region A, and can protrude into the long hole 2 as a spout (Si spout 9).

In the case where a large Si spout 9 is present in the long hole 2 (in FIG. 5, a value of a Si spout amount g is large), it is difficult (or impossible) to insert a rod-shaped member such as a thermocouple.

In the case where carbon (C) reacts with silicon (Si) to form silicon carbide (SiC), the volume increases as shown in the following expression.

$$C \ (52.1 \ cm^3) + Si \ (96.8 \ cm^3) \ \rightarrow \ SiC \ (100.0 \ cm^3)$$

Therefore, in the tubular region A (carbon tube), when the introduced Si reacts with the carbon fiber (C) to generate SiC, volume expansion occurs and a dense tubular wall is formed.

Accordingly, it is difficult for the free Si to pass through the dense tubular region A even in the case of volume expansion. Thus, the Si spout is prevented, making it easier to insert a thermocouple or the like into the long hole.

The Si spout amount g is preferably less than 1 mm, and more preferably less than 0.2 mm.

Since it is difficult for the free Si to pass through the tubular region A, in the obtained SiSiC member, the content (unit: vol%) of the Si simple substance in the tube exterior region B is higher than the content (unit: vol%) of the Si simple substance in the tubular region A, as described above.

In addition, the diameter of the Si simple substance in the tube exterior region B is larger than the diameter of the Si simple substance in the tubular region A.

<Application>

The SiSiC member including a long hole is not particularly limited in application, and can be used as a heating device because of excellent thermal conductivity, strength, and the like. For example, it is suitable as a top plate provided in a heating cooker such as an IH (induction heating) cooker.

The top plate of the heating cooker is a member on which an object to be heated such as a pot is placed.

In the related art, ceramics and the like are used as a material of the top plate. The top plate is required to be able to be subjected to temperature rise and drop at a high speed and to have high impact resistance. Therefore, the SiSiC member can be suitably used as the top plate of the heating cooker.

For temperature control, a thermocouple (not shown) is inserted into the long hole of the SiSiC member. Accordingly, the temperature of the SiSiC member and thus the temperature of the object to be heated disposed on the SiSiC member can be grasped.

The heating cooker may be used as part of a system kitchen.

The system kitchen includes devices such as a work table and a heating cooker, and these devices are connected by a worktop. Stainless steel, artificial marble, ceramics, and the like are used as a material of the worktop.

The heating cooker is used, for example, by being incorporated into an opening provided in the worktop. In this case, the top plate of the heating cooker may constitute a part of the worktop of the system kitchen.

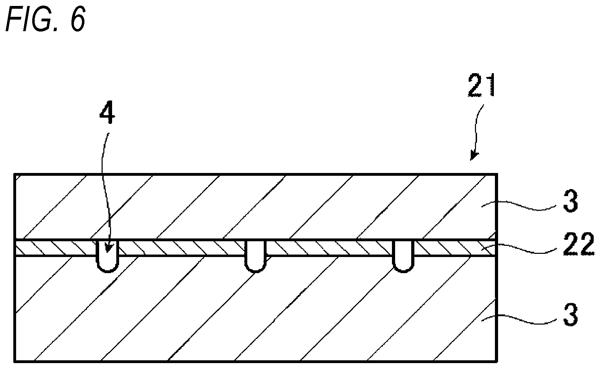

Here, another mode of the SiSiC member including a long hole for use in the heating cooker will be examined with reference to FIG. 6.

FIG. 6 is a cross-sectional view illustrating a SiSiC member 21 including a bonding surface.

First, a SiC molded body 3 including grooves 4 and a SiC molded body 3 without grooves are prepared in the same manner as the method described with reference to FIG. 2.

Then, as shown in FIG. 6, the SiC molded body 3 without grooves is disposed on the SiC molded body 3 including grooves 4. At this time, an interface therebetween is bonded by using an adhesive 22.

A case where the SiSiC member 21 shown in FIG. 6 is used as a top plate of a heating cooker is considered. In this case, an object to be heated (not shown) is placed on an upper surface of the SiSiC member 21 and heated from a lower surface side. However, since, depending on the adhesive 22 to be used, the heat may be blocked at the bonding surface, the heat may be difficult to transfer to the object to be heated (that is, the thermal conductivity may be poor).

In contrast, since the SiSiC member 1 (see FIG. 1) does not include such a bonding surface, it is relatively easy to heat the object to be heated. That is, the thermal conductivity is good.

Applications of the SiSiC member are not limited to the top plate of the heating cooker described above, and include: heater members for electric furnaces for heating experiments; and members for semiconductor device production apparatuses.

Depending on the application of the SiSiC member, the SiSiC member may be used by inserting a rod-shaped member such as an electrode into the long hole.

EXAMPLE

Hereinafter, the present invention will be specifically described with reference to Examples. However, the present invention is not limited to Examples described below.

Hereinafter, Examples 1 and 2 are Working Examples, and Examples 3 and 4 are Comparative Examples.

<Example 1>

A SiC molded body without grooves was prepared by the binder jet molding method using a powder deposition type 3D printer.

More specifically, first, a layer (thickness: about 0.2 mm) was formed using a mixture of SiC particles and a curing agent, and a binder was jetted from an inkjet nozzle onto the formed layer. This operation was repeated to prepare a rectangular parallelepiped SiC molded body (300 mm × 300 mm × 20 mm).

As the SiC particles, an $\alpha$-SiC powder (average particle diameter: 80 $\mu$m, manufactured by Shinano Electric Refining Co., Ltd.) was used. As the curing agent, a commercially available product (acidic substance aqueous solution containing xylenesulfonic acid and sulfuric acid) manufactured by ASK Chemicals Japan Co., Ltd. was used. The content of the curing agent in the mixture was 0.3 mass% with respect to the SiC particles. As the binder, a furan resin (manufactured by ASK Chemicals Japan Co., Ltd.) was used.

Next, a groove having a shape into which a carbon tube, which will be described later, was to be fitted, was formed using a milling machine in the prepared SiC molded body without grooves.

Next, a carbon tube (outer shape: 1.5 mm, inner diameter: 0.7 mm, length: more than 300 mm) was disposed in the formed groove.

Here, a carbon tube (diameter of carbon fiber: 7 $\mu$m, content of carbon fiber: 63 vol%, content of binder: 37 vol%, manufactured by DPP) formed by binding a plurality of carbon fibers with a binder (epoxy resin) was used.

Next, the groove after being disposed with the carbon tube was filled with a filler containing SiC particles.

More specifically, the mixture used for layer formation was mixed with the same binder as the binder that jetted from the inkjet nozzle, charged into the groove (on the carbon tube), and then dried.

Next, C impregnation was performed. That is, the SiC molded body was immersed in a carbon dispersion solution (content of carbon particles: 40 mass%) in which carbon particles (average particle diameter of secondary particles: 120 nm) were dispersed in water under a reduced pressure environment. Thus, the SiC molded body was impregnated with the carbon dispersion solution.

Then, drying (vacuum freeze drying) was performed. Specifically, the SiC molded body after being impregnated with the carbon dispersion solution was cooled in a drying chamber at a temperature of -10°C to 0°C for 20 minutes, and then the inside of the drying chamber was evacuated.

When the content of the carbon particles to SiC, in the SiC molded body after drying, was measured using a thermal analysis method, it was found to be 20 mass% in the region serving as the tube exterior region B.

Next, Si impregnation was performed. More specifically, first, Si simple substance (12.7 g) was disposed on the SiC molded body in a reaction furnace. Next, the inside of the reaction furnace was heated to 1550°C in a state of a reduced pressure environment. Accordingly, the Si simple substance was melted and impregnated into the SiC molded body, and a part thereof reached the carbon tube to generate SiC.

Thus, a SiSiC member, i.e., a sintered body containing free Si and SiC, was obtained.

<Example 2>

A SiSiC member was prepared in the same manner as in Example 1, except that C impregnation and subsequent drying were not performed.

<Example 3>

First, in the same manner as in Example 1, a SiC molded body including grooves was prepared. Next, a carbon rod (diameter: 0.7 mm, length: more than 300 mm) was disposed in the groove. Next, the groove after being disposed with the carbon rod was filled with a filler and dried in the same manner as in Example 1. The filler was cured by drying, and then the carbon rod was pulled out to form a long hole (diameter: 0.7 mm, length: 300 mm).

Then, C impregnation, drying, and Si impregnation were performed in the same manner as in Example 1 to prepare a SiSiC member.

<Example 4>

A SiSiC member was prepared in the same manner as in Example 3, except that C impregnation and subsequent drying were not performed.

<Evaluation>

Regarding the obtained SiSiC member, the content and the diameter of the Si simple substance in the tubular region A and the tube exterior region B were obtained by the methods described above. Results are shown in Table 1 below.

In Example 3 and Example 4, an outer peripheral region of the long hole formed by pulling out the carbon rod was the tubular region A, and a region outside the tubular region A was the tube exterior region B.

Further, the Si spout amount g (see FIG. 5) was obtained from a micrograph of a cross section of the obtained SiSiC member. An average value at any 5 fields of view was used as the Si spout amount g. In Table 1 below, "A" was recorded when the Si spout amount g was less than 0.2 mm, and "B" was recorded when it was 0.2 mm or more. In the case where the result is A, it can be evaluated that the effect of preventing the Si spout is excellent.

[Table 1]

| | | | Example 1 | Example 2 | Example 3 | Example 4 |
|---|---|---|---|---|---|---|
| Use/not use of carbon tube | | | Use | Use | Not use | Not use |
| Long hole | | Diameter [mm] | 0.7 | 0.7 | 0.7 | 0.7 |
| | | Length [mm] | 300 | 300 | 300 | 300 |
| C impregnation | | | Yes | No | Yes | No |
| Si Simple substance (free Si) | Content [vol%] | Tubular region A | 10 | 10 | 24 | 58 |
| | | Tube exterior region B | 24 | 58 | 24 | 58 |
| | | Ratio (A/B) | 0.4 | 0.2 | 1.0 | 1.0 |
| | Diameter [μm] | Tubular region A | 5 | 5 | 15 | 40 |
| | | Tube exterior region B | 15 | 40 | 15 | 40 |
| | | Ratio (A/B) | 0.3 | 0.1 | 1.0 | 1.0 |
| Prevention of Si spout | | | A | A | B | B |

<Conclusion of Evaluation Results>

As shown in Table 1 above, in Example 1 and Example 2, the content of the Si simple substance Si (free Si) was higher in the tube exterior region B than in the tubular region A.

In addition, in Example 1 and Example 2, the content of the Si simple substance (free Si) in the tubular region A was 20 vol% or less and the diameter thereof was 10 μm or less.

In such Example 1 and Example 2, the Si spout was prevented.

On the other hand, in Example 3 and Example 4, none of these were satisfied.

Comparing Example 1 with Example 2, in Example 1 (with C impregnation), the content of the Si simple substance in the tube exterior region B was lower and the diameter of the Si simple substance in the tube exterior region B was smaller than those in Example 2 (without C impregnation). This is presumed to be due to the molten Si for impregnation reacting with C in the tube exterior region B in Example 1 with C impregnation.

Although the preferred embodiments of the present invention have been described above, the present invention is not limited to the above-described embodiments, and various design changes can be made within the scope of the claims. The present application is based on a Japanese Patent Application (No. 2020-171499) filed on October 9, 2020, the contents of which are incorporated herein by reference.

REFERENCE SIGNS LIST

1: SiSiC member
2: long hole
3: SiC molded body
4: groove
5: carbon tube
6: carbon fiber
7: binder
8: filler
9: Si spout
21: SiSiC member
22: adhesive
A: tubular region
B: tube exterior region
g: Si spout amount

**Claims**

1. A SiSiC member comprising at least one long hole provided therein, the SiSiC member comprising:

   a tubular region A which is an outer peripheral region of the long hole; and
   a tube exterior region B which is a region outside the tubular region A, wherein
   a content of Si simple substance in the tube exterior region B in terms of vol% is higher than a content of Si simple substance in the tubular region A in terms of vol%.

2. The SiSiC member according to claim 1, wherein a ratio A/B of a diameter of the Si simple substance in the tubular region A to a diameter of the Si simple substance Si in the tube exterior region B is less than 0.2.

3. A SiSiC member comprising at least one long hole provided therein, the SiSiC member comprising:

   a tubular region A which is an outer peripheral region of the long hole; and
   a tube exterior region B which is a region outside the tubular region A, wherein
   a content of Si simple substance in the tubular region A is 20 vol% or less, and
   a diameter of Si simple substance in the tubular region A is 10 $\mu$m or less.

4. The SiSiC member according to any one of claims 1 to 3, wherein

   the long hole has a diameter of 0.1 mm to 2 mm, and
   the long hole has a length of 100 mm to 450 mm.

5. The SiSiC member according to any one of claims 1 to 4, wherein a volume ratio Si/SiC of the Si simple substance to SiC in the tube exterior region B is 20/80 to 40/60.

6. A heating device comprising:

   the SiSiC member according to any one of claims 1 to 5; and
   a rod-shaped member, wherein
   the rod-shaped member is inserted into the long hole.

*FIG. 1*

1

2  A  B

FIG. 2

FIG. 3

FIG. 4

*FIG. 5*

FIG. 6

21

4

3

22

3

## INTERNATIONAL SEARCH REPORT

| International application No. |
| --- |
| **PCT/JP2021/036716** |

**A.    CLASSIFICATION OF SUBJECT MATTER**

*C04B 35/577*(2006.01)i; *H05B 6/12*(2006.01)i
FI:    C04B35/577; H05B6/12 305

According to International Patent Classification (IPC) or to both national classification and IPC

**B.    FIELDS SEARCHED**

Minimum documentation searched (classification system followed by classification symbols)

C04B35/577; H05B6/12; C04B41/88

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2019/176898 A1 (IBIDEN CO., LTD.) 19 September 2019 (2019-09-19) entire text | 1-6 |
| A | WO 2017/213089 A1 (IBIDEN CO., LTD.) 14 December 2017 (2017-12-14) entire text | 1-6 |
| A | JP 2000-007423 A (NGK INSULATORS LTD.) 11 January 2000 (2000-01-11) entire text | 1-6 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 November 2021** | **30 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2021/036716**

| Patent document cited in search report | | | Publication date (day/month/year) | Patent family member(s) | | | Publication date (day/month/year) |
|---|---|---|---|---|---|---|---|
| WO | 2019/176898 | A1 | 19 September 2019 | (Family: none) | | | |
| WO | 2017/213089 | A1 | 14 December 2017 | US entire text EP CN | 2020/0165169 3466910 109311771 | A1 A1 A | |
| JP | 2000-007423 | A | 11 January 2000 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019194137 A
- JP H0532458 A

- JP 2020171499 A